(19) Europäisches Patentamt / European Patent Office / Office européen des brevets

(11) **EP 4 051 881 B1**

(12) **EUROPÄISCHE PATENTSCHRIFT**

(45) Veröffentlichungstag und Bekanntmachung des Hinweises auf die Patenterteilung:
**28.01.2026   Patentblatt 2026/05**

(21) Anmeldenummer: **20807650.5**

(22) Anmeldetag: **22.10.2020**

(51) Internationale Patentklassifikation (IPC):
*F01K 13/00* (2006.01)

(52) Gemeinsame Patentklassifikation (CPC):
**F01K 13/00**

(86) Internationale Anmeldenummer:
**PCT/DE2020/000253**

(87) Internationale Veröffentlichungsnummer:
**WO 2021/083443 (06.05.2021 Gazette 2021/18)**

(54) **VERFAHREN ZUR WANDLUNG VON WÄRMEENERGIE IN ELEKTROENERGIE BASIEREND AUF EINEM LINKSLÄUFIGEN THERMISCH REGENERIERTEN KREISPROZESS KOMBINIERT MIT THERMISCHER BESCHLEUNIGUNG UND DESSEN ANWENDUNG**

METHOD FOR THE CONVERSION OF THERMAL ENERGY INTO ELECTRICAL ENERGY BASED ON AN ANTICLOCKWISE THERMALLY REGENERATED CYCLE COMBINED WITH THERMAL ACCELERATION, AND THE APPLICATION OF SAME

PROCÉDÉ POUR CONVERTIR DE L'ÉNERGIE THERMIQUE EN ÉNERGIE ÉLECTRIQUE SUR LA BASE D'UN CYCLE À RÉGÉNÉRATION THERMIQUE INVERSE COMBINÉ À UNE ACCÉLÉRATION THERMIQUE ET UTILISATION CORRESPONDANTE

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **02.11.2019   DE 102019007886**

(43) Veröffentlichungstag der Anmeldung:
**07.09.2022   Patentblatt 2022/36**

(73) Patentinhaber: **DIPLOMAT Gesellschaft zur wirtsch. Restrukturierung und Wirtschaftsförderung mbH 60528 Frankfurt am Main (DE)**

(72) Erfinder: **HARAZIM, Wolfgang 08066 Zwickau (DE)**

(56) Entgegenhaltungen:
DD-A1- 230 904          DE-A1- 102005 045 333
DE-A1- 3 327 838        DE-A1- 3 412 922
US-A1- 2014 060 051     US-A1- 2018 372 333

• **No Search**

**Beschreibung**

Die Erfindung betrifft ein "Verfahren zur Wandlung von Wärmeenergie in Elektroenergie basierend auf einem linksläufigen thermisch regenerierten Kreisprozess kombiniert mit thermischer Beschleunigung und dessen Anwendung", welches in erster Linie im Bereich der Energiewirtschaft einsetzbar ist.

Der weltweit steigende Energiebedarf erhöht die anthropogenen Belastungen für Klima und Umwelt, da die genutzten thermischen Kreisprozesse nach dem Stand der Technik für Mobilität und Stromerzeugung hauptsächlich fossile Energiequellen verbrennen, die das Luftgemisch der Atmosphäre zusätzlich durch Abgase beeinflussen.

In einem thermischen Kreisprozess durchläuft ein Arbeitsfluid eine Reihe von Prozess-Schritten mit diversen Druck-, Volumen- und Temperaturänderungen bis es zyklisch den Startzustand erreicht. Systemisch bedingt Erwärmung Abkühlung und Kompression Expansion, um wieder zum Anfangszustand zu gelangen. Erfolgt die Kompression volumenbezogen im kleineren Zustand des Arbeitsfluids als die Expansion, handelt es sich prinzipiell um rechtsläufige Wärme-Kraftprozesse, die beispielsweise in Gasturbinen, Dampf- oder Kombikraftwerken, Diesel- oder Ottomotoren zum Einsatz kommen. Die zuzuführende Kompressionsarbeit und Wärmeenergie für die Erwärmung erhöhen den Druck- und Temperaturzustand des Arbeitsfluids und vergrößern dabei das spezifische Volumen. Mit der Abführung der Expansionskraft bzw. der mechanischen Energie und der Wärmeenergie zur Kühlung sinken Druck, Temperatur sowie spezifisches Volumen auf dem Anfangszustand zurück, wonach ein neuer Zyklus beginnt.

Das Verhältnis von Nutzen (Expansionskraft minus Kompressionsarbeit) zum Aufwand (zugeführte Wärmeenergie) beschreibt den Wirkungsgrad der Wärme-Kraftprozesse. Nach dem 0. Hauptsatz der Thermodynamik erfolgt die Wärmeübertragung vom Wärmeren zum Kälteren, wonach die abzuführende Wärmeenergie zur Kühlung nur noch an die Umwelt abgegeben werden kann. Aus der zugeführten Wärmeenergie entsteht neben der Zielgröße Kraft bzw. mechanische Energie noch Abwärme, die sich im Kreisprozessverlauf nicht mehr nutzen lässt, was sich mathematisch abgeleitet im Carnot-Faktor wiederspiegelt. Er hängt nur von den Absolutwerten der Prozessgrenztemperaturen ab und stellt das unerreichbare theoretische Effizienzmaximum für thermische rechtsläufige Kraftprozesse dar, die auf dem Grundverfahren kleinvolumige Kompression, Erwärmung, großvolumige Expansion und Abkühlung beruhen und das unabhängig von inneren Verschaltungsvarianten wie Abgas Rekuperation, Zwischenkühlung, Speisewasser Vorwärmung, Zwischenerhitzung, Turboladung etc.. Um hohe Effizienzen zu erzielen, benötigen diese Prozesse hohe Temperaturen, erzielt hauptsächlich durch Verbrennung, meist hohe Drücke und eine niedrige Umgebungstemperatur für die Abwärme, wodurch die anthropogenen Belastungen für Klima und Umwelt entstehen.

Nach dem Stand der Technik gibt es einen weiteren thermischen Kreisprozess, der mittels Arbeitszufuhr das Temperaturniveau der zugeführten Wärmeenergie im Prozessverlauf für Nutzzwecke anhebt und der je nach Zielgröße als linksläufiger Kälte- bzw. Wärmepumpenprozess oder allgemein als Arbeits-Wärmeprozess bekannt ist. Das Grundverfahren basiert auf Erwärmung, großvolumige Kompression, Abkühlung, kleinvolumige Expansion und entspricht dem Wärme-Kraftprozess jedoch in umgekehrter Durchlaufrichtung. In Abhängigkeit der Zielgröße liefert das Verhältnis Nutzen zum Aufwand eine Leistungszahl, die das Mehrfache der zugeführten Kompressionsarbeit angibt. Diese lässt sich nicht beliebig vergrößern, denn die mathematische Ableitung des theoretischen Maximums über die Absolutwerte der Prozessgrenztemperaturen liefert wiederum der Carnot-Faktor mit ($T_{max}/(T_{max}-T_{min})$). Je kleiner die Temperaturdifferenz zwischen Wärmeenergiezufuhr und -abfuhr, umso größer die Leistungszahl und umso geringer die Arbeitszufuhr für die Kompression.

Im rechtsläufigen Wärme-Kraftprozess sorgt nach der Expansion die Abwärme für das Erreichen des Startzustandes des Arbeitsfluids, fehlt aber dann betragsbezogen im darauffolgenden Zyklus, was die Wärmeenergiezufuhr erhöht. Eine kreislaufbedingte nichtänderbare Notwendigkeit im Kontext der rechtsläufigen Kraftprozesse, die Ursache für das nach Carnot benannte Wärme-Kraft- Wandlungs defizit.

Nach dem Stand der Technik lassen sich die thermischen linksläufigen Arbeits-Wärmeprozesse nicht für die Krafterzeugung nutzen, da nur bei reversibler Betrachtung der Betrag für die zuzuführende Kompressionsenergie dem der abzuführenden Expansionsenergie im Retourfall gleicht. Unter realen Bedingungen müsste für die Anhebung eines Temperaturniveaus zur Stromerzeugung mehr Antriebsenergie zugeführt werden als was die Wiederverstromung liefern könnte. Das Dokument DE3327838A1 offenbart ein Verfahren zur Wandlung von Wärmeenergie in Elektroenergie nach dem Stand der Technik.

Der Erfindung liegt die Aufgabe zugrunde, mit einem neuen Grundverfahren die anthropogenen Belastungen für Klima und Umwelt zu reduzieren.

Die Aufgabe wird erfindungsgemäß im Wesentlichen durch die kennzeichnenden Merkmale der Ansprüche 1 bis 13 gelöst. Nach dem Stand der Technik gibt es eine prinzipielle Aufgabentrennung, linksläufig - Wärmetransfer mittels Druckerhöhung durch Arbeitszufuhr oder rechtsläufig - Kraft plus Abwärme aus Wärmeenergiezufuhr.

Linksläufige Kaltdampfprozesse benötigen zwar für den Antrieb Kompressionsarbeit, könnten aber prinzipiell thermisch regenerieren, da die erforderliche Kühlung für die Kondensation des Arbeitsfluids bei einem höheren Druck- und Temperaturniveau abläuft als die benötigte Erwärmung für die Verdampfung. Eine derartige Schaltungsvariante machte bisher keinen Sinn, da nur die bei der Verdichtung entstehende Kompressionswärme abzuführen wäre, eine aufwendige Bestätigung des seit 1842 bekannten mechanischen Wärmeäquivalents, ein elektrisch betriebener Heizkörper.

Beim Phasenwechsel von der Flüssigkeit zum Gas vergrößert bspw. Wasser bei einem Druck von 1 bar und einer Temperatur von 99,6 °C das Volumen um das 1.624 fache, was einer Volumenänderungsarbeit von 169,24 kJ/kg entspricht. Dieser Betrag muss thermisch zugeführt werden, wenn sich beim Verdampfen in einem speziell konstruierten Wärmeübertrager die Fluidgeschwindigkeit mit zunehmenden Volumenstrom über den Strömungsquerschnitt beschleunigt. Hierbei wandelt sich thermische Energie in kinetische Strömungsenergie um, die einerseits die Kompressionsarbeit für den regenerierten Linksprozess liefert und andererseits eine nachgeschaltete Gleichdruckturbine zur Stromgewinnung antreibt.

Kombiniert mit dem thermisch regenerierten linksläufigen Kaltdampfprozess bei niedrigem Differenzdruck zwischen Kondensation und Verdampfung entsteht so ein neues Wärme-Kraft-Grundverfahren, da zyklisch im Prozess-Schritt Erwärmung beim Verdampfen mehr nutzbare Volumenänderungsarbeit über die thermische Beschleunigung wandelbar ist als für die Kompressionsarbeit zur Erhaltung der internen Zirkulation benötigt wird. Die restliche über eine Gleichdruckturbine auskoppelbare kinetische Strömungsenergie entspricht genau dem thermisch zuzuführenden energetischen Betrag. Aus dem linksläufigen Wärmetransfer-Arbeits-Prozess wird somit der neue linksläufige Wärme-Kraftprozess, indem die Wärmeenergiebeträge ohne Abwärme zyklisch intern zirkulieren.

Das neue Wärme-Kraft-Grundverfahren ist dadurch gekennzeichnet, dass die abzuführende Wärmeenergie aus Wärmeübertrager Kühlung (2) komplett zum Wärmeübertrager Erwärmung (4) übertragen wird, dass die großvolumige Kompression (1) und kleinvolumige Expansion (3) nur die Druck- und Temperaturdifferenz halten muss, die für den Wärmetransfer vom Wärmeübertrager Kühlung (2) zum Wärmeübertrager Erwärmung (4) gebraucht wird, dass neben dem Verdampfungsvorgang im Wärmeübertrager Erwärmung (4) zwischen Ein- und Austritt zusätzlich die Volumenzunahme zur Erhöhung der Strömungsenergie, zur thermischen Beschleunigung, genutzt wird, dass die thermische Wärmeenergiezufuhr (7) mit dem Wärmeübertrager thermische Beschleunigung (5) erfolgt, dass der Wärmeübertrager thermische Beschleunigung (5) den Wärmetransfer auf das strömende Arbeitsfluid übernimmt, dass die großvolumige Kompression (1) Anteile der Strömungsenergie nutzt, dass die Turbine (6) mit dem Hauptanteil der Strömungsenergie den Generator (8) antreibt, dass mit der Stromableitung (9) die Elektroenergieausfuhr aus dem Verfahren erfolgt, dass das Arbeitsfluid die prinzipiellen Prozess-Schritte: Kondensation durch Wärmeübertragung zur Verdampfung (10), zuerst Erwärmung für thermische Beschleunigung und dann Expansion oder umgekehrte Reihenfolge (11), Verdampfung durch regenerierte Wärmeübertragung aus der Kondensation kombiniert mit thermischer Beschleunigung (12), zuerst Geschwindigkeitsabbau in der Turbine und dann Kompression oder umgekehrte Reihenfolge (13), zyklisch durchläuft.

Somit ist die Aufgabenstellung gelöst. Der wesentlichste Vorteil der Erfindung liegt im Wegfall der Wärmeabführung an die Umwelt, wodurch sich nicht nur die Effizienz verbessert, sondern es gibt keine Begrenzung mehr durch die Umgebungstemperatur. In Abhängigkeit der spezifischen Stoffdaten der einsetzbaren Arbeitsfluide laufen die Kondensations- und Verdampfungsvorgänge isoliert auch bei tieferen Temperaturen ab, wobei gleichfalls das Temperaturniveau der zuzuführenden Wärmeenergie sinkt. Bei einem Druck von 1 bar verdampft bspw. Propan bei -42,4 °C. Die erforderliche Eintrittstemperatur am Wärmeübertrager thermische Beschleunigung (5) $t_E$ liegt dann etwa bei -24 °C, um die volle Volumenänderungsarbeit energetisch nutzen zu können. Andere Arbeitsfluide liegen bei gleichem 1 bar Innendruck wie Ethan ($t_E$= -70 °C), Xenon ($t_E$= -82 °C), Krypton ($t_E$= -134 °C) etc. noch tiefer im Temperaturniveau, wodurch sowohl die natürlichen Energiequellen wie die Umgebungsluft oder das Wasser der Weltmeere als auch technologisch bedingte Abwärmequellen aus der Prozesskühlung oder der Klimatisierung, prinzipiell für die Stromgewinnung ohne Verbrennung in Frage kommen.

Im Gegensatz zum Stand der Technik der rechtsläufigen Wärme-Kraftprozesse, die von hohen Temperaturen und Drücken im Prozessverlauf geprägt sind, reichen im neuen Verfahren Differenztemperaturen zwischen 10 K bis 50 K ab der Verdampfungstemperatur und Differenzdrücke im Millibar Bereich aus. Parameter, die in Analogie eher zur Meteorologie passen. Wind entsteht durch komplexe Vorgänge in der Atmosphäre, die hauptsächlich von der Sonneneinstrahlung angetrieben werden. Dichteunterschiede diverser Luftmassen bedingt durch Unterschiede in der Wasserbeladung und der Temperatur, verursachen Hoch- und Tiefdruckgebiete, wobei durch Abkühlung in den oberen Schichten die Feuchtigkeit als Regen auskondensiert. Danach strömen die kalten schwereren Luftmassen zurück in Richtung Tiefdruckgebiete. Windgeneratoren (Gleichdruckturbinen) nutzen diesen natürlichen wechselhaften intensitäts- und richtungsbezogenen Kreislauf zur $CO_2$ freien Stromgewinnung.

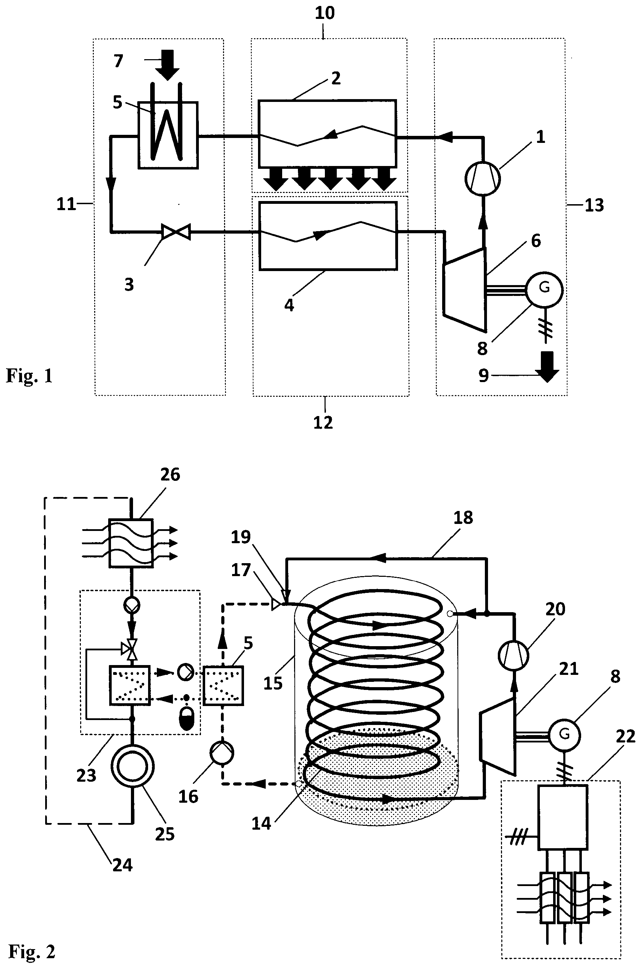

Eine bevorzugte Ausführungsform der Erfindung und deren Anwendung stellt **Fig. 2** dar.

Hier findet der Wärmetransfer mit dem Bezug zum Grundverfahren **Fig.1** vom Wärmeübertrager Kühlung (2) zum Wärmeübertrager Erwärmung (4) durch ein in einem Behälter (15) sich befindlichen Rohrwendel-Wärmeübertrager (14) über dessen Gesamtlänge statt, wobei am Außenrohr zyklisch das strömende Arbeitsfluid kondensiert und im Behälter (15) zu Boden tropft. Im Innenrohr verdampft das am Eintritt eingedüste Kondensat über die gesamte Länge des Rohrwendel-Wärmeübertragers (14) bis zum Austritt bei gleichem Strömungsquerschnitt, wodurch sich mit zunehmender Verdampfung die Fluidgeschwindigkeit beschleunigt. Aus Volumenänderungsarbeit (p $*$ $\Delta V$) wird kinetische Energie ( $\frac{\Delta c^2}{2}$ ). Die Volumenzunahme ist Folge des Lösens der Molekühlbindungen aus der Flüssigkeit bei konstantem Druck, wofür Wärmeenergie benötigt wird und wobei die Temperatur bis zur völligen Trennung aller Bindungen nicht ansteigt. Beim Kondensieren läuft dieser Vorgang in umgekehrter Richtung ab. Die für den Phasenwechsel benötigten zu- bzw. abzuführenden Wärmeenergien zirkulieren im Rohrwendel-Wärmeübertrager (14) und bestimmen damit dessen Länge. Diese Wärmeübertrager Bauart fördert durch ständigen Richtungswechsel mit sekundären Querströmungen die Benetzung der Rohrinnenfläche durch Fliehkraftseparation der schwereren Flüssigkeitstropfen, was die Wärmeübertragung intensiviert und die Baugröße begrenzt. Bezogen auf dem Bauaufwand ein wichtiger Aspekt, denn pro elektrisches kW aus dem Verfahren, müssen intern je nach Arbeitsfluid thermisch etwa 10 kW bis 16 kW zirkulieren.

Die zusätzliche Pumpe (16) ist nach dem Grundverfahren **Fig.1** nicht zwingend erforderlich, verbessert aber zu Lasten der Zielgröße Strom die praktische Umsetzung. Sie gleicht Druckverluste aus, die in der Rohrleitung zwischen Behälterboden und Dralldüse (17) sowie im Wärmeübertrager thermische Beschleunigung (5) beim Fördern des Kondensats entstehen und liefert Druck für die Drallbildung. Die Dralldüse (17) am Eintritt des Rohrwendel-Wärmeübertragers (14) entspricht dem Prozess-Schritt der kleinvolumigen Expansion (3) in **Fig.1.**

Die Strömungsverhältnisse bei der internen Wärmeübertragung bezüglich Differenzdruck zwischen Kondensation und Verdampfung sowie die Abstimmung mit der Gleichdruckturbine (21) verbessern sich, wenn durch einen Bypass (18) vom Ausgang des Diffusors (20) über die Entspannungsdüse (19) ein gasförmiger Teilmassenstrom zum Eintritt des Rohrwendel-Wärmeübertragers (14) gelangt. Der mit zu beschleunigende Teilmassenstrom reduziert zwar die Fluidgeschwindigkeit, vergrößert aber proportional den Massenstrom, wodurch die kinetische Strömungsenergie besser nutzbar erhalten bleibt.

Für gleichbleibende Strömungsverhältnisse im Verfahren ist es Notwendig, dass eine Stromregeleinheit (22) nach der Stromableitung (9) über den Generator (8) die Gleichdruckturbine (21) konstant belastet und den Strom gebrauchsfähig konvertiert, per Vorrang das Stromnetz bedient und den Stromüberschuss gleitend über elektrische Heizwiderstände an die Umwelt zurückführt. Dazu gehört auch, dass ein Zirkulationssystem (23) die thermische Wärmeenergiezufuhr (7) zum Wärmeübertrager thermische Beschleunigung (5) unabhängig vom Wärmequellen Inputsystem (24) mit immer gleichbleibender Temperatur bei gleichem Massendurchsatz übernimmt. Eine Einflussnahme auf die Strömung zur Lastregelung entfällt, da das Verfahren konstant immer im maximalen Auslegungszustand betrieben wird. Hierfür ist ein Wärmequellen-Inputsystem (24) erforderlich, dass sowohl die Abwärmequellen aus Kühlung und Klimatisierung (25) zusammenfasst als auch die Abkühlung der Außenluft (26) nutzt, um den Betrag für die thermische Wärmeenergiezufuhr (7) konstant ohne Verbrennung in das Zirkulationssystem (23) einzuspeisen.

Somit ist die Aufgabenstellung gelöst, da das Verfahren autark Strom aus Umweltenergie wandelt und dabei alle Lastfälle bis zur Maximallast abdeckt, wofür prinzipiell alle Arbeitsfluide im Verfahren einsetzbar sind. Die $CO_2$ freie Stromwandlung ist ein wichtiger Beitrag, um dem Klimawandel entgegen zu wirken.

**Fig. 1** stellt das Grundverfahren zur Wandlung von Wärmeenergie in Elektroenergie basierend auf einem linksläufigen thermisch regenerierten Kreisprozess kombiniert mit thermischer Beschleunigung dar.

**Fig. 2** stellt das Blockschaltbild der bevorzugten Ausführungsform und deren Anwendung nach **Fig. 1** dar

**Verfahren zur Wandlung von Wärmeenergie in Elektroenergie basierend auf einem linksläufigen thermisch regenerierten Kreisprozess kombiniert mit thermischer Beschleunigung und dessen Anwendung**

**Bezugszeichenliste**

**1** großvolumige Kompression

**2** Wärmeübertrager Kühlung

**3** kleinvolumige Expansion

**4** Wärmeübertrager Erwärmung

**5** Wärmeübertrager thermische Beschleunigung

**6** Turbine

**7** thermische Wärmeenergiezufuhr

**8** Generator

**9** Stromableitung

**10** Kondensation durch Wärmeübertragung zur Verdampfung

**11** erst Erwärmung für thermische Beschleunigung und dann Expansion oder umgekehrte Reihenfolge

**12** Verdampfung durch regenerierte Wärmeübertragung aus der Kondensation kombiniert mit thermischer Beschleunigung

**13** zuerst Geschwindigkeitsabbau in der Turbine und dann Kompression oder umgekehrte Reihenfolge

**14** Rohrwendel-Wärmeübertrager

**15** Behälter

**16** Pumpe

**17** Dralldüse

**18** Bypass

**19** Entspannungsdüse

**20** Diffusor

**21** Gleichdruckturbine

**22** Stromregeleinheit

**23** Zirkulationssystem

**24** Wärmequellen Inputsystem

**25** Abwärmequellen aus Kühlung und Klimatisierung

**26** Außenluft

**Patentansprüche**

1. Verfahren zur Wandlung von Wärmeenergie in Elektroenergie basierend auf einem linksläufigen thermisch regenerierten Kreisprozess kombiniert mit thermischer Beschleunigung und dessen Anwendung, bestehend aus den bekannten Grundprozess-Schritten der linksläufigen Kaltdampfprozesse, in dem das Arbeitsfluid die großvolumige Kompression (1), den Wärmeübertrager Kühlung (2) mit Kondensation, die kleinvolumige Expansion (3) und den Wärmeübertrager Erwärmung (4) mit Verdampfung zyklisch durchläuft, wobei

   a.) die abzuführende Wärmeenergie aus Wärmeübertrager Kühlung (2) komplett zum Wärmeübertrager Erwärmung (4) übertragen wird,
   b.) die großvolumige Kompression (1) und kleinvolumige Expansion (3) nur die Druck- und Temperaturdifferenz halten muss, die für den Wärmetransfer vom Wärmeübertrager Kühlung (2) zum Wärmeübertrager Erwärmung (4) gebraucht wird,
   c.) neben dem Verdampfungsvorgang im Wärmeübertrager Erwärmung (4) zwischen Ein- und Austritt zusätzlich die Volumenzunahme zur Erhöhung der Strömungsenergie, zur thermischen Beschleunigung, genutzt wird,
   d.) die thermische Wärmeenergiezufuhr (7) mit dem Wärmeübertrager thermische Beschleunigung (5) erfolgt,
   e.) der Wärmeübertrager thermische Beschleunigung (5) den Wärmetransfer auf das strömende Arbeitsfluid übernimmt,
   f.) die großvolumige Kompression (1) Anteile der Strömungsenergie nutzt,
   g.) die Turbine (6) mit dem Hauptanteil der Strömungsenergie den Generator (8) antreibt,
   h.) mit der Stromableitung (9) die Elektroenergieausfuhr aus dem Verfahren erfolgt,
   i.) und wobei das Arbeitsfluid die prinzipiellen Prozess-Schritte: Kondensation durch Wärmeübertragung zur Verdampfung (10), erst Erwärmung für thermische Beschleunigung und dann Expansion oder umgekehrte Reihenfolge (11), Verdampfung durch regenerierte Wärmeübertragung aus der Kondensation kombiniert mit thermischer Beschleunigung (12), erst Geschwindigkeitsabbau in der Turbine und dann Kompression oder umgekehrte Reihenfolge (13), zyklisch durchläuft.

2. Verfahren nach Anspruch 1, wobei der Wärmetransfer vom Wärmeübertrager Kühlung (2) zum Wärmeübertrager Erwärmung (4) durch ein in einem Behälter (15) sich befindlichen Rohrwendel-Wärmeübertrager (14) über dessen Gesamtlänge erfolgt.

3. Verfahren nach Anspruch 1 und 2, wobei am Rohrwendel-Wärmeübertrager (14) am Außenrohr zyklisch das strömende Arbeitsfluid kondensiert und im Behälter (15) zu Boden tropft.

4. Verfahren nach Anspruch 1 bis 3, wobei im Innenrohr das am Eintritt eingedüste Kondensat über die gesamte Länge des Rohrwendel-Wärmeübertragers (14) bis zum Austritt bei gleichem Strömungsquerschnitt verdampft.

5. Verfahren nach Anspruch 1 bis 4, wobei eine Pumpe (16) das Kondensat aus dem Behälter (15) durch den Wärmeübertrager thermische Beschleunigung (5) bis zur Dralldüse (17) fördert.

6. Verfahren nach Anspruch 1 bis 5, wobei durch einen Bypass (18) vom Ausgang des Diffusors (20) über die Entspannungsdüse (19) ein gasförmiger Teilmassenstrom zum Eintritt des Rohrwendel-Wärmeübertragers (14) gelangt,

7. Verfahren nach Anspruch 1 bis 6, wobei eine Stromregeleinheit (22) nach der Stromableitung (9) über den Generator (8) die Gleichdruckturbine (21) konstant belastet.

8. Verfahren nach Anspruch 1 bis 7, wobei die Stromregeleinheit (22) den Strom gebrauchsfähig konvertiert, per Vorrang das Stromnetz bedient und den Stromüberschuss gleitend über elektrische Heizwiderstände an die Umwelt zurückführt.

9. Verfahren nach Anspruch 1 bis 8, wobei ein Zirkulationssystem (23) die thermische Wärmeenergiezufuhr (7) zum Wärmeübertrager thermische Beschleunigung (5) unabhängig vom Wärmequellen Inputsystem (24) mit immer gleichbleibender Temperatur bei gleichem Massendurchsatz übernimmt.

10. Verfahren nach Anspruch 1 bis 9, wobei das Verfahren konstant immer im maximalen Auslegungszustand betrieben wird.

11. Verfahren nach Anspruch 1 bis 10, wobei ein Wärmequellen-Inputsystem (24) sowohl die Abwärmequellen aus Kühlung und Klimatisierung (25) zusammenfasst als auch die Abkühlung der Außenluft (26) nutzt, um den Betrag für die thermische Wärmeenergiezufuhr (7) ohne Verbrennung in das Zirkulationssystem (23) einzuspeisen.

12. Verfahren nach Anspruch 1 bis 11, wobei das Verfahren autark Strom aus Umweltenergie wandelt und dabei alle Lastfälle bis zur Maximallast abdeckt.

13. Verfahren nach Anspruch 1 bis 12, wobei prinzipiell alle Arbeitsfluide im Verfahren einsetzbar sind.

**Claims**

1. process for the conversion of thermal energy into electrical energy based on a left-hand thermally regenerated cycle process combined with thermal acceleration and its application, consisting of the known basic process steps of the left-hand cold steam processes, in which the working fluid cyclically passes through the large-volume compression (1), the heat exchanger cooling (2) with condensation, the small-volume expansion (3) and the heat exchanger heating (4) with evaporation, whereby

    a.) the heat energy to be dissipated from the cooling heat exchanger (2) is completely transferred to the heating heat exchanger (4)
    b.) the large-volume compression (1) and small-volume expansion (3) only has to maintain the pressure and temperature difference required for the heat transfer from the heat exchanger cooling (2) to the heat exchanger heating (4),
    c.) in addition to the evaporation process in the heat exchanger heating (4) between the inlet and outlet, the increase in volume is also used to increase the flow energy, for thermal acceleration,
    d.) the thermal heat energy supply (7) takes place with the heat exchanger thermal acceleration (5),
    e.) the heat exchanger thermal acceleration (5) takes over the heat transfer to the flowing working fluid,
    f.) the large-volume compression (1) utilizes parts of the flow energy,
    g.) the turbine (6) drives the generator (8) with the main part of the flow energy,
    h.) the electrical energy is discharged from the process via the current discharge (9),
    i.) and wherein the working fluid cyclically passes through the principal process steps: condensation by heat transfer to vaporization (10), first heating for thermal acceleration and then expansion or reverse order (11), vaporization by regenerated heat transfer from the condensation combined with thermal acceleration (12), first velocity reduction in the turbine and then compression or reverse order (13).

2. process according to claim 1,
wherein
the heat transfer from the heat exchanger cooling (2) to the heat exchanger heating (4) is effected by a tubular coil heat exchanger (14) located in a container (15) over the entire length thereof.

3. process according to claims 1 and 2,
wherein
the flowing working fluid condenses cyclically on the outer tube of the tubular coil heat exchanger (14) and drips to the bottom of the container (15).

4. process according to claim 1 to 3,
whereby
the condensate injected at the inlet evaporates in the inner tube over the entire length of the coiled tube heat exchanger (14) up to the outlet with the same flow cross-section.

5. process according to claims 1 to 4,
wherein
a pump (16) conveys the condensate from the tank (15) through the heat exchanger thermal acceleration (5) to the swirl nozzle (17).

6. process according to claim 1 to 5,
wherein
a gaseous partial mass flow passes through a bypass (18) from the outlet of the diffuser (20) via the expansion nozzle (19) to the inlet of the tubular coil heat exchanger (14),

**7.** method according to claims 1 to 6, wherein
a current control unit (22) constantly loads the constant pressure turbine (21) after the current discharge (9) via the generator (8).

**8.** method according to claim 1 to 7, wherein
the current control unit (22) converts the current so that it can be used, serves the power grid by priority and returns the excess current to the environment in a sliding manner via electrical heating resistors.

**9.** method according to claim 1 to 8, wherein
a circulation system (23) takes over the thermal heat energy supply (7) to the heat exchanger thermal acceleration (5) independently of the heat source input system (24) with always constant temperature at the same mass flow rate.

**10.** process according to claim 1 to 9, wherein
the process is always constantly operated in the maximum design state.

**11.** method according to claim 1 to 10, wherein
a heat source input system (24) combines both the waste heat sources from cooling and air conditioning (25) and utilizes the cooling of the outside air (26) to feed the amount for the thermal heat energy input (7) into the circulation system (23) without combustion.

**12.** method according to claim 1 to 11, wherein
the method autonomously converts electricity from environmental energy and covers all load cases up to the maximum load.

**13.** method according to claim 1 to 12, wherein
in principle, all working fluids can be used in the process.

## Revendications

**1.** Procédé de conversion d'énergie thermique en énergie électrique basé sur un cycle thermorégénérateur à rotation inverse combiné à une accélération thermique et son application, comprenant les étapes de base connues des processus à vapeur froide à rotation inverse, dans lequel le fluide de travail passe cycliquement par la compression à grand volume (1), le refroidissement du transfert de chaleur (2) avec condensation, la détente à faible volume (3) et le réchauffement du transfert de chaleur (4) avec évaporation,

a.) l'énergie thermique à évacuer est transférée intégralement de l'échangeur de chaleur de refroidissement (2) vers l'échangeur de chaleur de réchauffement (4) ,
b.) la compression à grand volume (1) et l'expansion à petit volume (3) de l' ne doivent maintenir que la différence de pression et de température nécessaire au transfert de chaleur de l'échangeur de chaleur de refroidissement (2) vers l'échangeur de chaleur de chauffage (4),
c.) outre le processus d'évaporation dans l'échangeur de chaleur de chauffage (4) entre l'entrée et la sortie, l'augmentation de volume est également utilisée pour augmenter l'énergie d'écoulement, pour l'accélération thermique,
d.) l'apport d'énergie thermique (7) s'effectue avec l'échangeur de chaleur à accélération thermique (5),
e.) l'accélérateur thermique (5) prend en charge le transfert de chaleur vers le fluide de travail en écoulement,
f.) la compression à grand volume (1) utilise des parties de l'énergie cinétique,
g.) la turbine (6) entraîne le générateur (8) avec la majeure partie de l'énergie cinétique,
h.) la dérivation de courant (9) assure l'exportation de l'énergie électrique hors du processus,
i.) et où le fluide de travail effectue les étapes principales du processus : condensation par transfert de chaleur pour l'évaporation (10), d'abord chauffage pour l'accélération thermique, puis expansion ou dans l'ordre inverse (11), évaporation par transfert de chaleur régénéré à partir de la condensation combinée à une accélération thermique (12), d'abord une réduction de la vitesse dans la turbine, puis une compression ou l'ordre inverse (13), de manière cyclique.

**2.** Procédé selon la revendication 1, dans lequel
le transfert de chaleur de l'échangeur de chaleur de refroidissement (2) vers l'échangeur de chaleur de chauffage (4) s'effectue à travers un échangeur de chaleur à serpentin (14) situé dans un récipient (15) sur toute sa longueur.

**3.** Procédé selon les revendications 1 et 2, dans lequel
le fluide de travail en circulation se condense cycliquement sur le tube extérieur de l'échangeur de chaleur à serpentin (14) et s'égoutte au fond du réservoir (15).

4. Procédé selon les revendications 1 à 3, où

   dans le tube intérieur, le condensat injecté à l'entrée s'évapore sur toute la longueur de l'échangeur de chaleur à serpentin tubulaire (14) jusqu'à la sortie avec la même section d'écoulement.

5. Procédé selon les revendications 1 à 4, dans lequel

   une pompe (16) transporte le condensat du réservoir (15) à travers l'accélérateur thermique (5) jusqu'à la buse à jet hélicoïdal (17).

6. Procédé selon les revendications 1 à 5, dans lequel

   un débit massique partiel gazeux parvient à l'entrée de l'échangeur de chaleur à serpentin tubulaire (14) par une dérivation (18) depuis la sortie du diffuseur (20) via la buse de détente (19),

7. Procédé selon les revendications 1 à 6, dans lequel

   une unité de régulation de débit (22) après la dérivation de débit (9) via le générateur (8) charge en permanence la turbine à pression constante (21).

8. Procédé selon les revendications 1 à 7, dans lequel

   l'unité de régulation de courant (22) convertit le courant en un courant utilisable, alimente en priorité le réseau électrique et renvoie l'excédent de courant à l'environnement de manière progressive via des résistances électriques chauffantes.

9. Procédé selon les revendications 1 à 8, dans lequel

   un système de circulation (23) prend en charge l'alimentation en énergie thermique (7) de l'accélérateur thermique (5) de l'échangeur de chaleur, indépendamment du système d'entrée de la source de chaleur (24), à une température toujours constante et avec un débit massique identique.

10. Procédé selon les revendications 1 à 9, dans lequel

    le procédé est toujours utilisé dans des conditions de conception maximales.

11. Procédé selon les revendications 1 à 10, dans lequel

    un système d'entrée de source de chaleur (24) combine à la fois les sources de chaleur résiduelle provenant du refroidissement et de la climatisation (25) et utilise le refroidissement de l'air extérieur (26) pour alimenter le système de circulation (23) en énergie thermique (7) sans combustion.

12. Procédé selon les revendications 1 à 11, dans lequel

    le procédé convertit de manière autonome l'électricité à partir de l'énergie environnementale et couvre ainsi tous les cas de charge jusqu'à la charge maximale.

13. Procédé selon les revendications 1 à 12, dans lequel

    tous les fluides de travail peuvent en principe être utilisés dans le procédé.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3327838 A1